# EUROPEAN PATENT SPECIFICATION

(11) **EP 3 711 448 B1**
(45) Date of publication and mention of the grant of the patent: **09.06.2021**
(21) Application number: 19723513.8
(22) Date of filing: 29.04.2019
(51) Int. Cl.: H04W 76/19

(54) **MAC RESET PROCEDURES**
MAC-RÜCKSETZVERFAHREN
PROCEDURES POUR RESET DE MAC

(30) Priority: 10.05.2018 US 201862669578 P
(43) Date of publication of application: 23.09.2020
(73) Proprietor: TELEFONAKTIEBOLAGET LM ERICSSON (PUBL), 164 83 Stockholm (SE)
(72) Inventor: DA SILVA, Icaro L. J., 170 77 SOLNA (SE); HOFSTRÖM, Björn, 589 41 Linköping (SE); CHRISTOFFERSSON, Jan, 975 61 LULEÅ (SE); FOLKE, Mats, 162 43 VÄLLINGBY (SE)
(74) Representative: Ericsson
(86) International application number: PCT/SE2019/050383
(87) International publication number: WO 2019/216805

(56) References cited:
- HUAWEI ET AL: "Text proposal for beam failure recovery under non-CA", 3GPP DRAFT; R2-1802279 TEXT PROPOSAL FOR BEAM FAILURE RECOVERY UNDER NON-CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CE , vol. RAN WG2, no. Athens, Greece; 20180226 - 20180303 15 February 2018 (2018-02-15), XP051399439, Retrieved from the Internet: URL:http://www.3gpp.org/ftp/tsg%5Fran/WG2% 5FRL2/TSGR2%5F101/Docs/ [retrieved on 2018-02-15]
- "3rd Generation Partnership Project; Technical Specification Group Radio Access Network; Evolved Universal Terrestrial Radio Access (E-UTRA); Radio Resource Control (RRC); Protocol specification (Release 15)", 3GPP STANDARD; TECHNICAL SPECIFICATION; 3GPP TS 36.331, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.1.0, 3 April 2018 (2018-04-03), pages 1-786, XP051450932, [retrieved on 2018-04-03]
- HUAWEI ET AL: "BFR with SCell deactivation and MAC reset", 3GPP DRAFT; R2-1805887 BFR WITH SCELL DEACTIVATION AND MAC RESET, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG2, no. Sanya, China; 20180416 - 20180420 14 April 2018 (2018-04-14), XP051429500, Retrieved from the Internet: URL:http://www.3gpp.org/ftp/Meetings%5F3GP P%5FSYNC/RAN2/Docs/ [retrieved on 2018-04-14]
- "3rd Generation Partnership Project; Technical Specification Group Radio Access Network; NR; Medium Access Control (MAC) protocol specification (Release 15)", 3GPP STANDARD; TECHNICAL SPECIFICATION; 3GPP TS 38.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.1.0, 2 April 2018 (2018-04-02), pages 1-67, XP051450732, [retrieved on 2018-04-02]
- ZTE ET AL: "CR for the behavior of BFI_Counter and beamFailureDetectionTimer During BWP Switch", 3GPP DRAFT; R2-1804875 CR FOR THE BEHAVIOR OF BFI_COUNTER AND BEAMFAILURERECOVERYTIMER DURING BWP SWITCH, 3RD GENERATION PARTNERSHIP PROJECT (3GPP), MOBILE COMPETENCE CENTRE ; 650, ROUTE DES LUCIOLES , vol. RAN WG2, no. Sanya, China; 20180416 - 20180420 14 April 2018 (2018-04-14), XP051428578, Retrieved from the Internet: URL:http://www.3gpp.org/ftp/Meetings%5F3GP P%5FSYNC/RAN2/Docs/ [retrieved on 2018-04-14]

## Description

### TECHNICAL FIELD

This disclosure is related to procedures associated with resetting a Medium Access Control (MAC) entity in a wireless device.

### BACKGROUND

In the system architecture for Long-Term Evolution (LTE) wireless networks and devices, as standardized by the members of the 3rd-Generation Partnership Projection, the Medium Access Control (MAC) protocol has corresponding implementations in both the wireless device ("user equipment," or "UE," in 3GPP terminology) and the base stations (eNodeB, in 3GPP terminology) and regulates several aspects of how the radio resources are used. The MAC protocol provides mapping of logical channels to transport channels, provides hybrid automatic-repeat-request (HARQ) functionality, handles discontinuous receive operation, resource requests, power headroom reporting, and the like, and controls random access procedures. In the 5th-generation (5G) wireless network standards currently under development by 3GPP, where the new radio network standards are commonly referred to as "NR," the MAC protocol will provide much or all of the above functionality, as well as other functionality needed to address new concepts that are introduced as part of NR

One of these new concepts is the use of "bandwidth parts," or "BWPs," which are subsets of the bandwidth (frequency resources) generally available in a cell. By providing for the configuration of UEs with one or more BWPs, which may represent less than all of the available bandwidth available to the system overall, the capabilities of individual UEs with respect to how much bandwidth (and which frequencies) they can handle may be taken into account. The network can configure the UE with multiple BWPs and schedule uplink and downlink transmissions on the different BWPs, a procedure called BWP switching. The downlink (DL) BWP on which the UE attempts to receive downlink control messages, i.e., the Physical Downlink Control Channel (PDCCH), is called the active DL BWP. The active uplink (UL) BWP may be understood as the UL BWP that, at any given time, may be scheduled for transmission without requiring a change from one UL BWP to another. According to 3GPP specifications, only one BWP (for each of the DL and UL) can be active at a time. One BWP is called the initial BWP and is used for procedures like random access.

Another concept introduced in NR is the concept of beam recovery. Beam detection and beam failure recovery procedures under development in 3GPP provide the UE and the gNB (3GPP terminology for an NR base station or access point) with the means for achieving beam correspondence, i.e., for determining which beam(s) will be used for communication. According to current approaches, when a UE's physical layer determines that no beam is currently usable, e.g., by determining that the Received Signal Reference Power (RSRP) for a tracked beam is below a threshold, it will indicate a "beam failure" to the MAC entity, where a MAC entity is an implementation/instance of the MAC protocol in the UE. The MAC entity counts such indications, using a beam failure indication counter, and upon reaching a predetermined number it initiates a random access procedure towards the gNB. Note that in the discussion that follows, the MAC protocol, of which each MAC entity is a functional instance, may sometimes be referred to as simply "the MAC."

The Radio Resource Control (RRC) protocol operates "above" the MAC protocol or MAC layer, in the LTE and NR protocol stacks, and regulates how the MAC operates, controlling access of the UE to the network and to radio resources. The LTE RRC protocols have been carefully developed to interact properly with the MAC protocol. Changes to the NR MAC, such as those changes discussed above, may cause unexpected problems with RRC operation, resulting in poor UE performance.

The document 3rd Generation Partnership Project; Technical Specification Group Radio Access Network; NR; Medium Access Control (MAC) protocol specification (Release 15)", 3GPP STANDARD; TECHNICAL SPECIFICATION; 3GPP TS 38.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.1.0, 2 April 2018 (2018-04-02), pages 1-67, XP051450732 describes the MAC protocol.

### SUMMARY

According to NR operation as previously defined, the UE will continue to attempt to receive PDCCH on its active BWP when the MAC protocol/entity is reset. The network may have a different view of which BWP is the active one. If the BWP is not switched to a default BWP, e.g., the initial BWP, the UE will continue to attempt to receive PDCCH on the wrong BWP. This results in the network being unable to reach the UE.

Furthermore, with existing functionality, the UE will not reset the beam failure counter when MAC is reset. This means that after MAC is reset (which could include a reconfiguration of the beams) beam failures of an older configuration are counted towards a new configuration. The UE may then trigger a beam failure recovery spuriously, i.e. prematurely or otherwise at inappropriate times, leading to unexpectedly poor performance.

To address these problems, various embodiments of the techniques and apparatus described herein switch uplink and downlink BWP to a default BWP, such as the initial BWP, upon MAC reset. Some of these and some other embodiments reset the beam failure indication counter and stop beam failure related timers upon MAC reset. In addition, in some embodiments, measurements related to the beam recovery and state variables related to beam selection are deleted.

The invention is set out in the appended set of claims.

According to some embodiments, a method, in a wireless device operating in a wireless communication network and configured to selectively operate in one or more BWPs configured by the wireless communication network, includes monitoring an active BWP of the one or more BWPs for a downlink control channel. The method also includes detecting a reset event and, responsive to detecting the reset event, switching the active BWP to a predetermined default BWP of the one or more BWPs.

Other exemplary embodiments include radio nodes in the cellular network (e.g., base stations, low-power nodes, wireless devices, user equipment, *etc.*) configurable to perform operations corresponding to the exemplary methods and/or procedures described above. Other exemplary embodiments include non-transitory, computer-readable media storing program instructions that, when executed by at least one processor, configure such radio nodes to perform operations corresponding to the exemplary methods and/or procedures described above.

These and other objects, features and advantages of the exemplary embodiments of the present disclosure will become apparent upon reading the following detailed description of the exemplary embodiments of the present disclosure.

### BRIEF DESCRIPTION OF THE DRAWINGS

Figure 1 is a block diagram illustrating an example wireless device, according to some embodiments.
Figure 2 is a process flow diagram illustrating an example method according to some embodiments, as carried out in the wireless device.

In both LTE and NR, from an RRC specifications perspective, a MAC reset, i.e., a reset of parameters and functionality in the MAC protocol, is triggered by any of the following scenarios:
1. Upon performing cell reselection while T300 (or any other access control timer) is running (i.e., UE has sent a message on SRB0 using a default MAC configuration and cell reselection occurs before the UE gets a response);
2. Upon the expiry of T300;
3. Upon the reception of RRC Reject;
4. Upon the abortion of an RRC connection triggered by upper layers;
5. Upon initiating an RRC Connection Re-establishment;
6. Upon leaving RRC_CONNECTED; and
7. Upon handover failure.
In most of these cases, a subsequent RRC transmission by the UE will be needed, hence, the MAC is reset.

According to NR operation as previously defined, the UE will continue to attempt to receive the Physical Downlink Control Channel (PDCCH) on its active BWP when the MAC protocol/entity is reset. The network may have a different view of which BWP is the active one. If the BWP is not switched to a default BWP, e.g., the initial BWP, the UE will continue to attempt to receive PDCCH on the wrong BWP. This results in the network being unable to reach the UE.

Furthermore, with previously existing functionality, the UE will not reset the beam failure counter when MAC is reset. This means that after MAC is reset (which could include a reconfiguration of the beams), beam failures of an older configuration are counted towards a new configuration. The UE may then trigger beam failure recovery spuriously, leading to unexpectedly poor performance.

To address these problems, various embodiments of the techniques and apparatus described herein switch uplink and downlink BWP to a default BWP, such as the initial BWP, upon MAC reset. These BWPs (the initial and/or default BWP) are pre-determined, e.g., by RRC configuration procedures. Some of these embodiments and some other embodiments reset the beam failure indication counter and stop beam failure related timers upon MAC reset. In addition, in some embodiments, measurements related to the beam recovery and state variables related to beam selection are deleted.

The disclosed techniques related to the use of BWP ensure deterministic UE behavior, allowing the network to quickly and efficiently reach the UE after a MAC reset. The disclosed techniques regarding beam failure and beam recovery help to ensure that the UE does not trigger beam failure recovery procedures spuriously.

Embodiments of the invention can be implemented, for example, in the MAC specification (3GPP TS 38.321) as shown below. The bold parts show changes to the specification that implement the techniques described herein. Note that not all of these changes need be present, in various embodiments.

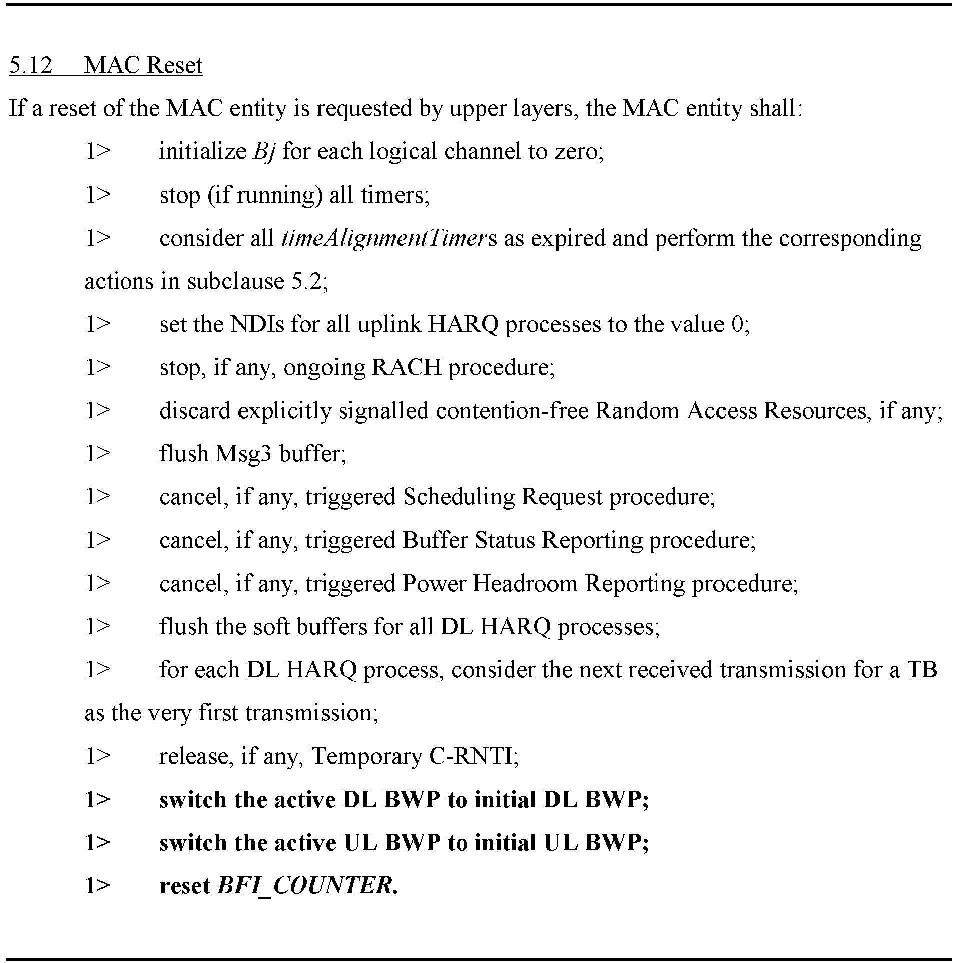

The techniques and apparatuses contemplated herein comprise some embodiments related to the parameters associated to beam recovery/failure procedure when MAC is reset. In the beam failure recovery (BFR) procedures, the physical layer indicates "failure instances" to MAC, i.e., time instances when no beam meets a particular suitability criterion. This is covered in current versions of the specifications. These procedures can be further adapted to track "success instances" would be indications from the physical layer to MAC that there is at least one beam that meets the suitability criterion. This solution is not captured in current specifications for NR

Counting the success indications can be used to reset or stop a beam failure recovery (BFR) procedure. This is analogous, in some respects, to the way Radio Link Monitoring (RLM) works in LTE, where a number of "out-of-sync" events from the PHY triggers RRC to start a timer which, upon expiry, triggers Radio Link Failure (RLF). However, upon receiving a number of "in-sync" events (i.e., success instances) from PHY the timer is stopped and RLF is avoided.

According to the techniques described herein, when the MAC protocol/MAC entity is reset in a wireless device (UE), beam failure recovery procedures should be reset, reinitialized, or restarted, to avoid spurious reselections. This may involve, in various embodiments, resetting a beam failure indicator counter and/or resetting a beam detection success instance counter.

In some embodiments of the presently disclosed techniques, upon MAC reset the UE stops performing beam failure detection. In some embodiments, upon MAC reset the UE stops performing beam failure recovery, if running. In some embodiments, upon MAC reset the UE resets to zero the number of failure instances (called BFI_COUNTER, as shown above).

In some embodiments, upon MAC reset the UE resets to zero the number of success instances. In some embodiments, upon MAC reset the UE stops any timer related to beam failure detection or beam recovery procedure. In some embodiments, upon MAC reset the UE re-starts any timer related to beam failure detection or beam recovery procedure.

One of the timers described above can be a timer that controls for how long the UE needs to keep searching for new beams upon failure detection. Another timer can be a timer associated to switching between Contention-Free random access and contention-based random access, started for example when the UE trigger beam failure recovery (while that timer is running the UE has to prioritize contention free resources for beam recovery).

In some embodiments, upon MAC reset, the UE notifies lower layers for further actions, e.g., related to the cleaning of beam failure detection procedures. In some embodiments, upon MAC reset, the UE deletes measurements related to the beam recovery and state variables related to beam selection (e.g. best selected best beam, etc.).

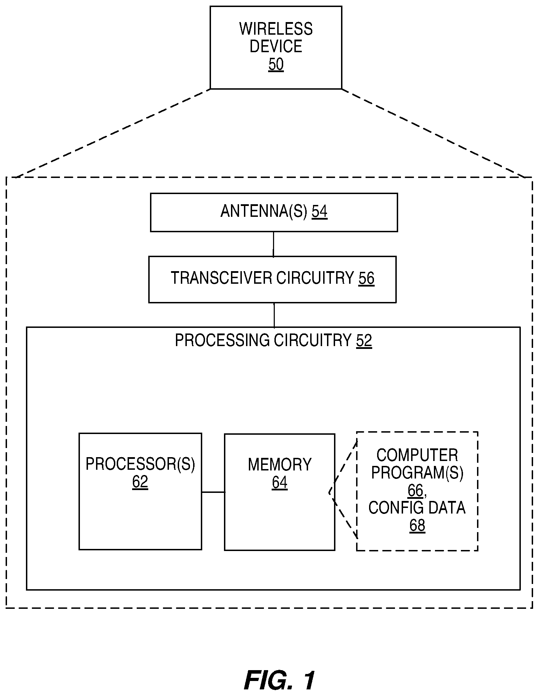

Accordingly, Figure 1 illustrates an example of a wireless device 50 that is configured to perform the techniques described herein. The wireless device 50 may also be referred to, in various contexts, as a radio communication device, a UE, a target device, a device-to-device (D2D) UE, a machine-type UE or UE capable of machine to machine (M2M) communication, a sensor-equipped UE, a PDA (personal digital assistant), a wireless tablet, a mobile terminal, a smart phone, laptop-embedded equipment (LEE), laptop-mounted equipment (LME), a wireless USB dongle, a Customer Premises Equipment (CPE), etc.

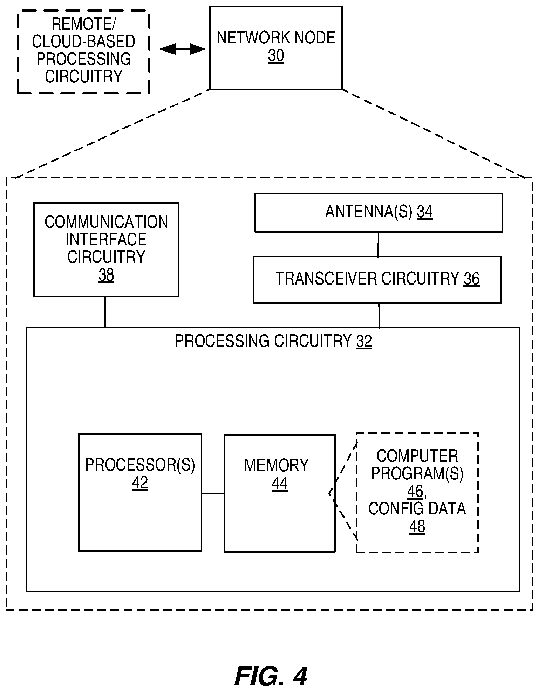

The wireless device 50 communicates with one or more radio nodes or base stations, such as one or more network nodes 30 as illustrated in Figure 4, via antennas 54 and a transceiver circuitry 56. The transceiver circuitry 56 may include transmitter circuits, receiver circuits, and associated control circuits that are collectively configured to transmit and receive signals according to a radio access technology, for the purposes of providing cellular communication services.

The wireless device 50 also includes one or more processing circuits 52 that are operatively associated with and control the radio transceiver circuitry 56. The processing circuitry 52 comprises one or more digital processing circuits, e.g., one or more microprocessors 62, microcontrollers, Digital Signal Processors (DSPs), Field Programmable Gate Arrays (FPGAs), Complex Programmable Logic Devices (CPLDs), Application Specific Integrated Circuits (ASICs), or any mix thereof. More generally, the processing circuitry 52 may comprise fixed circuitry, or programmable circuitry that is specially adapted via the execution of program instructions implementing the functionality taught herein or may comprise some mix of fixed and programmed circuitry.

The processing circuitry 52 also includes a memory 64. The memory 64, in some embodiments, stores one or more computer programs 66 for execution by processors 62 and, optionally, configuration data 68. The memory 64 provides non-transitory storage for the computer program 66 and it may comprise one or more types of computer-readable media, such as disk storage, solid-state memory storage, or any mix thereof. By way of non-limiting example, the memory 64 comprises any one or more of SRAM, DRAM, EEPROM, and FLASH memory, which may be in the processing circuitry 52 and/or separate from processing circuitry 52. In general, the memory 64 comprises one or more types of computer-readable storage media providing non-transitory storage of the computer program 66 and any configuration data 68 used by the wireless device 50.

Accordingly, in some embodiments, the wireless device 50 is configured to selectively operate in one or more BWPs configured by the wireless communication network. The processing circuitry 52 is, in some embodiments, configured to monitor an active BWP of the one or more BWPs for a downlink control channel. The processing circuitry 52 is also, in some embodiments, configured to detect a reset event and, responsive to detecting the reset event, switch the active BWP to a predetermined default BWP of the one or more BWPs.

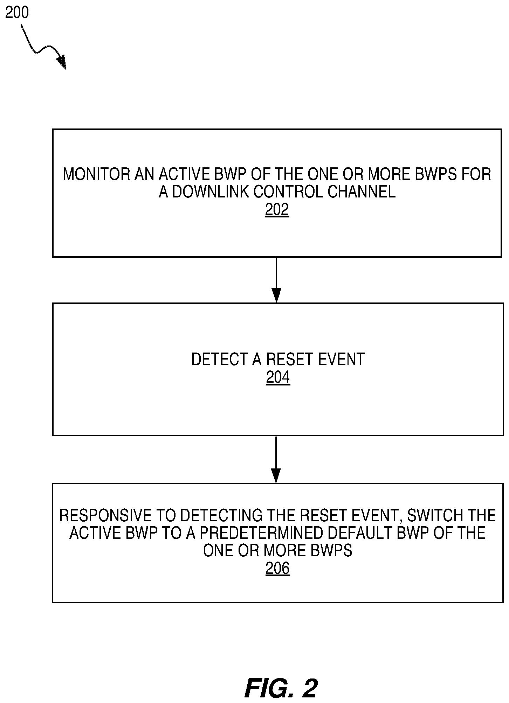

Figure 2 is a process flow diagram illustrating a corresponding method 200 implemented in the wireless device 50. The method 200 includes monitoring an active BWP of the one or more BWPs for a downlink control channel (block 202). The method 200 also includes detecting a reset event (204) and, responsive to detecting the reset event, switching the active BWP to a predetermined default BWP of the one or more BWPs (block 206). In some embodiments, the predetermined default BWP is a predetermined initial BWP of the one or more BWPs.

The switching of the active BWP to the predetermined default BWP may include switching an active downlink BWP to a predetermined default downlink BWP, and the method 200 may further include switching an active uplink BWP to a predetermined default uplink BWP, responsive to detecting the reset event.

In some embodiments, the detected reset event comprises an event triggering a reset of a MAC entity in the wireless device. The detected reset event may include any event selected from the following: cell reselection while the wireless device is waiting for a response to a Radio Resource Control (RRC) message sent to the wireless communication network; expiry of a timer started upon the sending of an RRC connection establishment request; receipt of an RRC connection reject message; aborting of an RRC connection triggered by the wireless device; initiation of an RRC connection re-establishment; leaving RRC connected mode; and failure of a handover.

The method 200 may include resetting a counter that tracks beam failure indications, responsive to detecting the reset event. The method 200 may include stopping beam failure detection procedures, responsive to detecting the reset event. The method 200 may also include stopping an ongoing beam failure recovery procedure, responsive to detecting the reset event.

The method 200 may include resetting a count of success instances, responsive to detecting the reset event. The method 200 may also include resetting a timer related to beam failure detection or beam recovery procedure. The timer related to beam failure detection or beam recovery procedure may include a timer that controls for how long the wireless device is to search for new beams upon failure detection or a timer that controls a switching between contention-free and contention-based random access procedures.

The method 200 may include deleting one or more measurements related to beam recovery and/or one or more state variables related to beam selection, responsive to detecting the reset event.

According to some embodiments, the wireless device 50 is configured to perform another technique involving a reset event. The processing circuitry 52 of the wireless device 50 is configured to detect a reset event triggering a reset of a MAC entity in the wireless device. The processing circuitry 52 is also configured to, responsive to detecting the reset event, reset a counter that tracks beam failure indications.

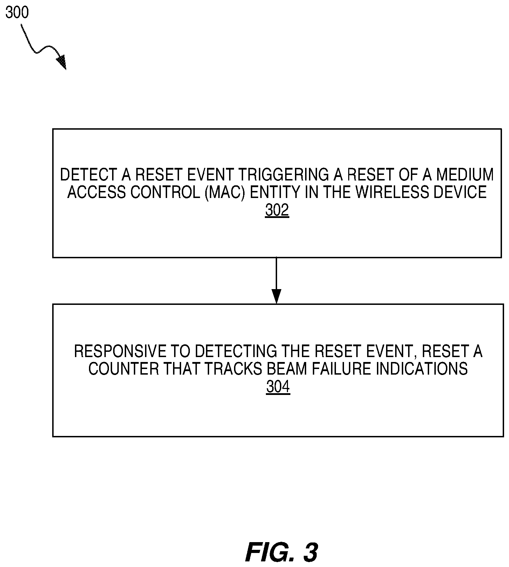

The processing circuitry 52 is configured to perform a corresponding method 300, according to some embodiments. The method 300 shown in Figure 3 includes detecting a reset event triggering a reset of a MAC entity in the wireless device 50 (block 302) and, responsive to detecting the reset event, resetting a counter that tracks beam failure indications (block 304).

The method 300 may include stopping beam failure detection procedures, responsive to detecting the reset event. The method 300 may also include stopping an ongoing beam failure recovery procedure, responsive to detecting the reset event.

In some embodiments, the method 300 includes resetting a count of success instances, responsive to detecting the reset event. The method 300 may also include resetting a timer related to beam failure detection or beam recovery procedure. The timer related to beam failure detection or beam recovery procedure may include a timer that controls for how long the wireless device is to search for new beams upon failure detection or a timer that controls a switching between contention-free and contention-based random access procedures.

The method 300 may further include deleting one or more measurements related to beam recovery and/or one or more state variables related to beam selection, responsive to detecting the reset event.

According to some embodiments, when a reset of the MAC entity is requested by upper layers, the MAC entity shall, among other things, stop all timers. If the *bwp-InactivityTimer* (which controls when the UE returns to the default BWP after a period of inactivity on the active BWP) is running and stopped, the UE can switch to the default downlink BWP to avoid any ambiguity of which BWP the UE is monitoring after a reset.

Figure 4 is a block diagram illustrating an example network node 30 in the corresponding wireless communication network, which may be configured to operate as a base station. The network node 30 may be one of multiple network nodes in a cloud-based system that carry out the described techniques. The network node 30 may be, for example, an eNB or a 5G gNB. The network node 30 provides an air interface to a wireless device, e.g., 5G air interface for downlink transmission and uplink reception, which is implemented via antennas 34 and transceiver circuitry 36. The transceiver circuitry 36 includes transmitter circuits, receiver circuits, and associated control circuits that are collectively configured to transmit and receive signals according to a radio access technology, for the purposes of providing cellular communication, or WLAN services if necessary. According to various embodiments, cellular communication services may be operated according to any one or more of the 3GPP cellular standards, GSM, GPRS, WCDMA, HSDPA, LTE, LTE-Advanced and 5G. The network node 30 also include communication interface circuitry 38 for communicating with nodes in the core network, other peer radio nodes, and/or other types of nodes in the network.

The network node 30 also includes one or more processing circuits 32 that are operatively associated with and configured to control the communication interface circuitry 38 and/or the transceiver circuitry 36. The processing circuitry 32 comprises one or more digital processors 42, e.g., one or more microprocessors, microcontrollers, DSPs, FPGAs, CPLDs, ASICs, or any combination thereof. More generally, the processing circuitry 32 may comprise fixed circuitry, or programmable circuitry that is specially configured via the execution of program instructions implementing the functionality taught herein or may comprise some combination of fixed and programmable circuitry. The processor(s) 42 may be multi-core.

The processing circuitry 32 also includes a memory 44. The memory 44, in some embodiments, stores one or more computer programs 46 and, optionally, configuration data 48. The memory 44 provides non-transitory storage for the computer program 46 and it may comprise one or more types of computer-readable media, such as disk storage, solid-state memory storage, or any combination thereof. By way of non-limiting example, the memory 44 may comprise any one or more of SRAM, DRAM, EEPROM, and FLASH memory, which may be in the processing circuitry 32 and/or separate from the processing circuitry 32. In general, the memory 44 comprises one or more types of computer-readable storage media providing non-transitory storage of the computer program 46 and any configuration data 48 used by the network node 30. Here, "non-transitory" means permanent, semi-permanent, or at least temporarily persistent storage and encompasses both long-term storage in non-volatile memory and storage in working memory, e.g., for program execution.

In some embodiments, the processing circuitry 32 of one or more network nodes 30 connected to a wireless network is configured to perform operations that configure and/or enable the wireless device 50 to perform the techniques described herein. The network nodes 30 also enable the wireless device 50 to selectively operate in one or more BWPs configured by the wireless network.

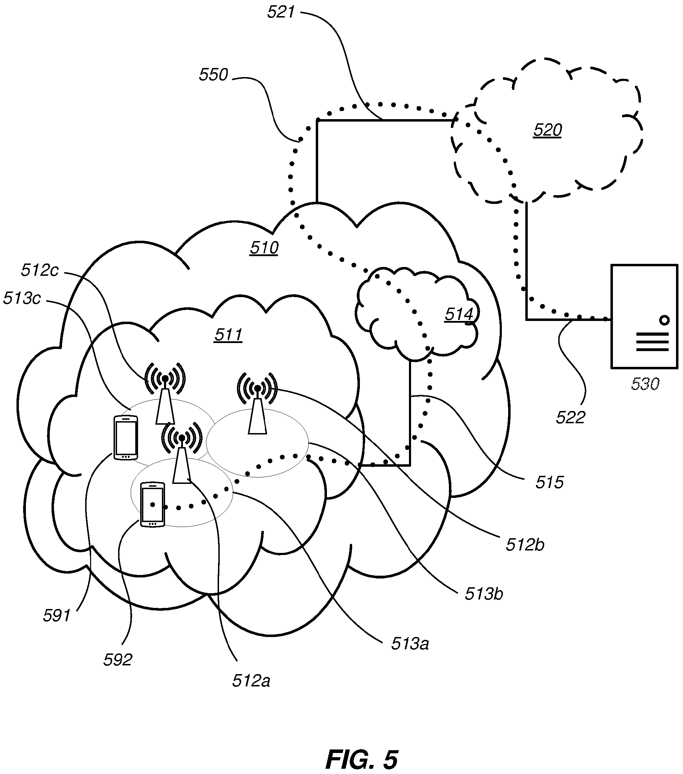

Figure 5, in accordance with various embodiments, shows a communication system that includes a telecommunication network 510, such as a 3GPP-type cellular network, which comprises an access network 511, such as an gNB-RAN, and a core network 514 (e.g., 5GC). The access network 511 comprises a plurality of base stations 512a, 512b, 512c, such as gNBs or other types of wireless access points, each defining a corresponding coverage area 513a, 513b, 513c. Each base station 512a, 512b, 512c is connectable to the core network 514 over a wired or wireless connection 515. A first user equipment (UE) 591 located in coverage area 513c is configured to wirelessly connect to, or be paged by, the corresponding base station 512c. A second UE 592 in coverage area 513a is wirelessly connectable to the corresponding base station 512a. While a plurality of UEs 591, 592 are illustrated in this example, the disclosed embodiments are equally applicable to a situation where a sole UE is in the coverage area or where a sole UE is connecting to the corresponding base station 512.

The telecommunication network 510 is itself connected to a host computer 530, which may be embodied in the hardware and/or software of a standalone server, a cloud-implemented server, a distributed server or as processing resources in a server farm. The host computer 530 may be under the ownership or control of a service provider or may be operated by the service provider or on behalf of the service provider. The connections 521, 522 between the telecommunication network 510 and the host computer 530 may extend directly from the core network 514 to the host computer 530 or may go via an optional intermediate network 520. The intermediate network 520 may be one of, or a combination of more than one of, a public, private or hosted network; the intermediate network 520, if any, may be a backbone network or the Internet; in particular, the intermediate network 520 may comprise two or more sub-networks (not shown).

The communication system of Figure 5 as a whole enables connectivity between one of the connected UEs 591, 592 and the host computer 530. The connectivity may be described as an over-the-top (OTT) connection 550. The host computer 530 and the connected UEs 591, 592 are configured to communicate data and/or signaling via the OTT connection 550, using the access network 511, the core network 514, any intermediate network 520 and possible further infrastructure (not shown) as intermediaries. The OTT connection 550 may be transparent in the sense that the participating communication devices through which the OTT connection 550 passes are unaware of routing of uplink and downlink communications. For example, a base station 512 may not or need not be informed about the past routing of an incoming downlink communication with data originating from a host computer 530 to be forwarded (e.g., handed over) to a connected UE 591. Similarly, the base station 512 need not be aware of the future routing of an outgoing uplink communication originating from the UE 591 towards the host computer 530.

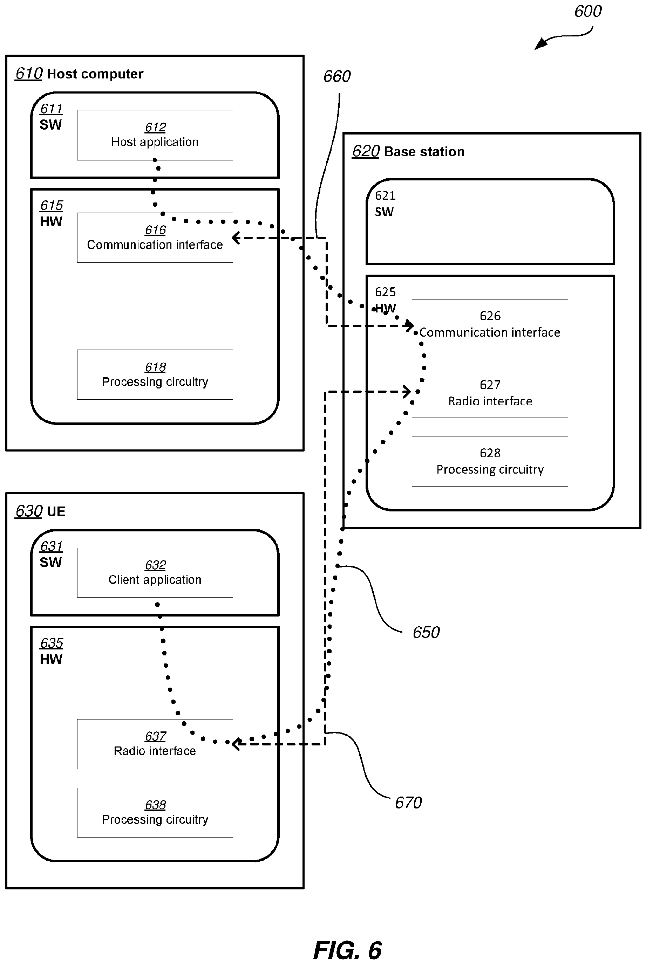

Example implementations, in accordance with an embodiment, of the UE, base station and host computer discussed in the preceding paragraphs will now be described with reference to Figure 6. In a communication system 600, a host computer 610 comprises hardware 615 including a communication interface 616 configured to set up and maintain a wired or wireless connection with an interface of a different communication device of the communication system 600. The host computer 610 further comprises processing circuitry 618, which may have storage and/or processing capabilities. In particular, the processing circuitry 618 may comprise one or more programmable processors, application-specific integrated circuits, field programmable gate arrays or combinations of these (not shown) adapted to execute instructions. The host computer 610 further comprises software 611, which is stored in or accessible by the host computer 610 and executable by the processing circuitry 616. The software 611 includes a host application 612. The host application 612 may be operable to provide a service to a remote user, such as a UE 630 connecting via an OTT connection 650 terminating at the UE 630 and the host computer 610. In providing the service to the remote user, the host application 612 may provide user data which is transmitted using the OTT connection 650.

The communication system 600 further includes a base station 620 provided in a telecommunication system and comprising hardware 625 enabling it to communicate with the host computer 610 and with the UE 630. The hardware 625 may include a communication interface 626 for setting up and maintaining a wired or wireless connection with an interface of a different communication device of the communication system 600, as well as a radio interface 627 for setting up and maintaining at least wireless connection 670 with the UE 630 located in a coverage area (not shown in Figure 6) served by the base station 620. The communication interface 626 may be configured to facilitate a connection 660 to the host computer 610. The connection 660 may be direct or it may pass through a core network (not shown in Figure 6) of the telecommunication system and/or through one or more intermediate networks outside the telecommunication system. In the embodiment shown, the hardware 625 of the base station 620 further includes processing circuitry 628, which may comprise one or more programmable processors, application-specific integrated circuits, field programmable gate arrays or combinations of these (not shown) adapted to execute instructions. The base station 620 further has software 621 stored internally or accessible via an external connection.

The communication system 600 further includes the UE 630 already referred to. Its hardware 635 may include a radio interface 637 configured to set up and maintain a wireless connection 670 with a base station serving a coverage area in which the UE 630 is currently located. The hardware 635 of the UE 630 further includes processing circuitry 638, which may comprise one or more programmable processors, application-specific integrated circuits, field programmable gate arrays or combinations of these (not shown) adapted to execute instructions. The UE 630 further comprises software 631, which is stored in or accessible by the UE 630 and executable by the processing circuitry 638. The software 631 includes a client application 632. The client application 632 may be operable to provide a service to a human or non-human user via the UE 630, with the support of the host computer 610. In the host computer 610, an executing host application 612 may communicate with the executing client application 632 via the OTT connection 650 terminating at the UE 630 and the host computer 610. In providing the service to the user, the client application 632 may receive request data from the host application 612 and provide user data in response to the request data. The OTT connection 650 may transfer both the request data and the user data. The client application 632 may interact with the user to generate the user data that it provides.

It is noted that the host computer 610, base station 620 and UE 630 illustrated in Figure 6 may be identical to the host computer 530, one of the base stations 512a, 512b, 512c and one of the UEs 591, 592 of Figure 5, respectively. This is to say, the inner workings of these entities may be as shown in Figure 6 and independently, the surrounding network topology may be that of Figure 5.

In Figure 6, the OTT connection 650 has been drawn abstractly to illustrate the communication between the host computer 610 and the use equipment 630 via the base station 620, without explicit reference to any intermediary devices and the precise routing of messages via these devices. Network infrastructure may determine the routing, which it may be configured to hide from the UE 630 or from the service provider operating the host computer 610, or both. While the OTT connection 650 is active, the network infrastructure may further make decisions by which it dynamically changes the routing (e.g., on the basis of load balancing consideration or reconfiguration of the network).

The wireless connection 670 between the UE 630 and the base station 620 is in accordance with the teachings of the embodiments described throughout this disclosure. One or more of the various embodiments improve the performance of OTT services provided to the UE 630 using the OTT connection 650, in which the wireless connection 670 forms the last segment. More precisely, the disclosed techniques related to the use of BWP ensure deterministic UE behavior, allowing the network to quickly and efficiently reach the UE after a MAC reset. The disclosed techniques regarding beam failure and beam recovery help to ensure that the UE does not trigger beam failure recovery procedures spuriously. These embodiments will result in improved performance, such as better and/or more consistent throughput, and/or reduced delays, for users of the RAN.

A measurement procedure may be provided for the purpose of monitoring data rate, latency and other factors on which the one or more embodiments improve. There may further be an optional network functionality for reconfiguring the OTT connection 650 between the host computer 610 and UE 630, in response to variations in the measurement results. The measurement procedure and/or the network functionality for reconfiguring the OTT connection 650 may be implemented in the software 611 of the host computer 610 or in the software 631 of the UE 630, or both. In embodiments, sensors (not shown) may be deployed in or in association with communication devices through which the OTT connection 650 passes; the sensors may participate in the measurement procedure by supplying values of the monitored quantities exemplified above or by supplying values of other physical quantities from which software 611, 631 may compute or estimate the monitored quantities. The reconfiguring of the OTT connection 650 may include message format, retransmission settings, preferred routing etc.; the reconfiguring need not affect the base station 620, and it may be unknown or imperceptible to the base station 620. Such procedures and functionalities may be known and practiced in the art. In certain embodiments, measurements may involve proprietary UE signaling facilitating the host computer's 610 measurements of throughput, propagation times, latency and the like. The measurements may be implemented in that the software 611, 631 causes messages to be transmitted, in particular empty or 'dummy' messages, using the OTT connection 650 while it monitors propagation times, errors etc.

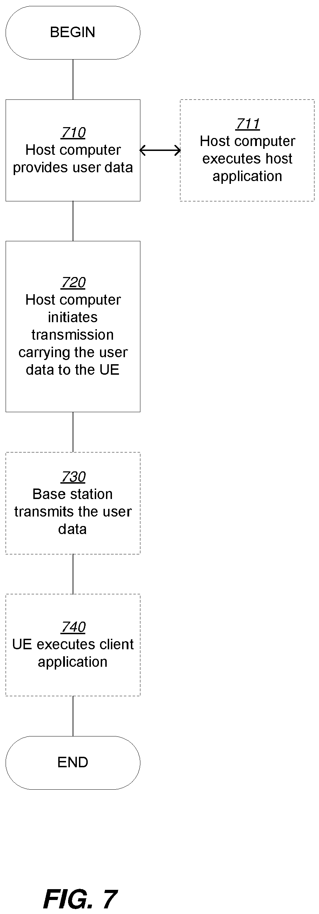

Figure 7 is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 7 will be included in this section. In a first step 710 of the method, the host computer provides user data. In an optional substep 711 of the first step 710, the host computer provides the user data by executing a host application. In a second step 720, the host computer initiates a transmission carrying the user data to the UE. In an optional third step 730, the base station transmits to the UE the user data which was carried in the transmission that the host computer initiated, in accordance with the teachings of the embodiments described throughout this disclosure. In an optional fourth step 740, the UE executes a client application associated with the host application executed by the host computer.

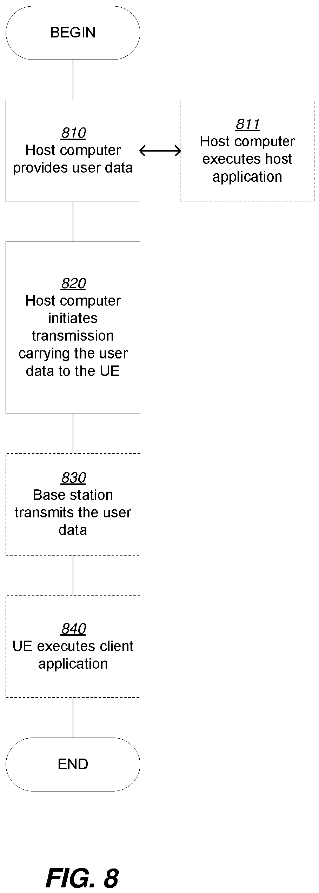

Figure 8 is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 8 will be included in this section. In a first step 810 of the method, the host computer provides user data. In an optional substep (not shown), the host computer provides the user data by executing a host application. In a second step 820, the host computer initiates a transmission carrying the user data to the UE.

The transmission may pass via the base station, in accordance with the teachings of the embodiments described throughout this disclosure. In an optional third step 830, the UE receives the user data carried in the transmission.

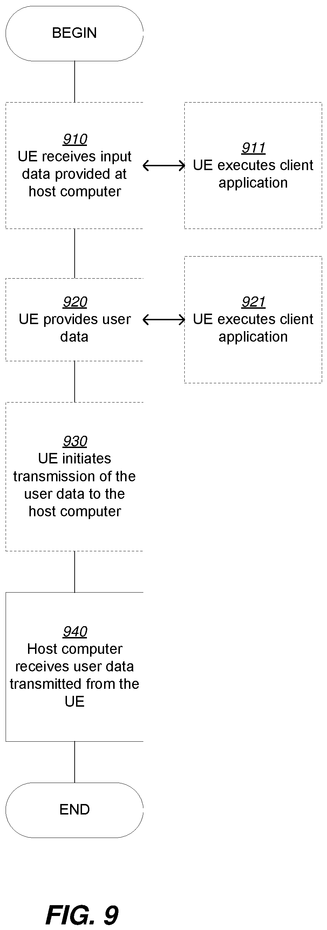

Figure 9 is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 9 will be included in this section. In an optional first step 910 of the method, the UE receives input data provided by the host computer. Additionally or alternatively, in an optional second step 920, the UE provides user data. In an optional sub step 921 of the second step 920, the UE provides the user data by executing a client application. In a further optional sub step 911 of the first step 2010, the UE executes a client application which provides the user data in reaction to the received input data provided by the host computer. In providing the user data, the executed client application may further consider user input received from the user. Regardless of the specific manner in which the user data was provided, the UE initiates, in an optional third substep 930, transmission of the user data to the host computer. In a fourth step 940 of the method, the host computer receives the user data transmitted from the UE, in accordance with the teachings of the embodiments described throughout this disclosure.

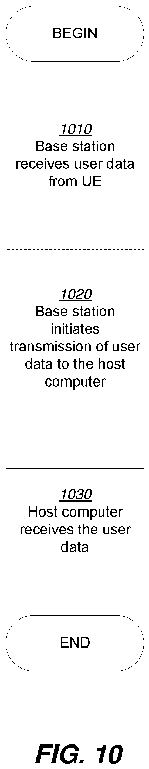

Figure 10 is a flowchart illustrating a method implemented in a communication system, in accordance with one embodiment. The communication system includes a host computer, a base station and a UE which may be those described with reference to Figures 5 and 6. For simplicity of the present disclosure, only drawing references to Figure 10 will be included in this section. In an optional first step 1010 of the method, in accordance with the teachings of the embodiments described throughout this disclosure, the base station receives user data from the UE. In an optional second step 1020, the base station initiates transmission of the received user data to the host computer. In a third step 1030, the host computer receives the user data carried in the transmission initiated by the base station.

As discussed in detail above, the techniques described herein, e.g., as illustrated in the process flow diagrams of Figures 2-3, may be implemented, in whole or in part, using computer program instructions executed by one or more processors. It will be appreciated that a functional implementation of these techniques may be represented in terms of functional modules, where each functional module corresponds to a functional unit of software executing in an appropriate processor or to a functional digital hardware circuit, or some combination of both.

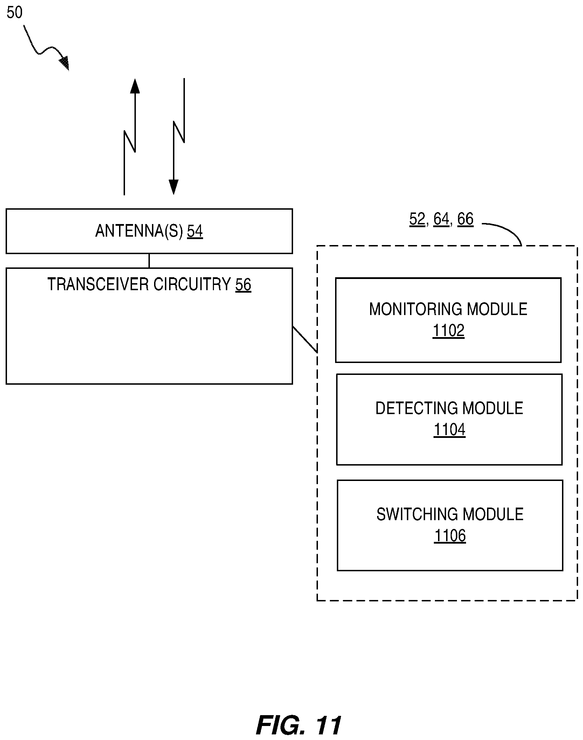

Figure 11 illustrates an example functional module or circuit architecture as may be implemented in a wireless device 50 operating in a wireless communication network and configured to selectively operate in one or more BWPs configured by the wireless communication network. The implementation includes a monitoring module 1102 for monitoring an active BWP of the one or more BWPs for a downlink control channel. The implementation also includes a detecting module 1104 for detecting a reset event and a switching module 1106 for, responsive to detecting the reset event, switching the active BWP to a predetermined default BWP of the one or more BWPs.

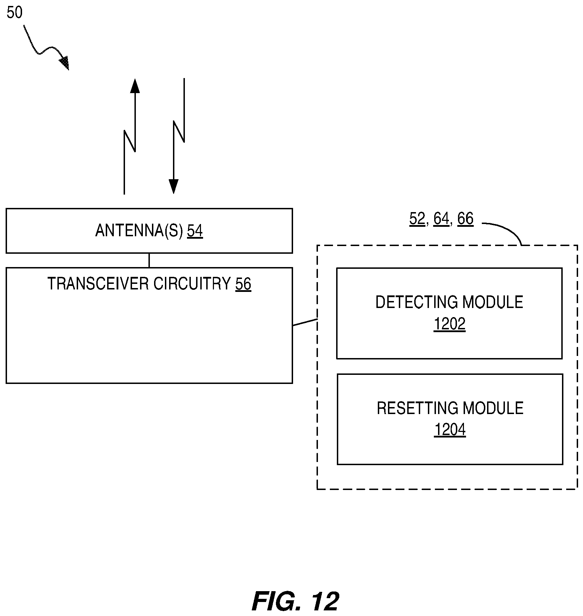

In another example implementation, shown in Figure 12, the wireless device 50 includes a detecting module 1202 for detecting a reset event triggering a reset of a MAC entity in the wireless device and a resetting module 1204 for, responsive to detecting the reset event, resetting a counter that tracks beam failure indications.

Notably, modifications and other embodiments of the disclosed invention(s) will come to mind to one skilled in the art having the benefit of the teachings presented in the foregoing descriptions and the associated drawings. Therefore, it is to be understood that the invention(s) is/are not to be limited to the specific embodiments disclosed and that modifications and other embodiments are intended to be included within the scope of this disclosure. Although specific terms may be employed herein, they are used in a generic and descriptive sense only and not for purposes of limitation.

## Claims

1. A method for operating with bandwidth parts, BWPs, in a wireless device operating in a wireless communication network and configured to selectively operate in one or more BWPs configured by the wireless communication network, the method comprising:
monitoring (202) an active BWP of the one or more BWPs for a downlink control channel the method is further **characterized by**:
detecting (204) a reset event triggering a reset of a Medium Access Control, MAC, entity in the wireless device; and
responsive to detecting the reset event, switching (206) the active BWP to a predetermined default BWP of the one or more BWPs.

2. The method of claim 1, wherein the predetermined default BWP is a predetermined initial BWP of the one or more BWPS.

3. The method of claim 1 or 2, wherein switching (206) the active BWP to the predetermined default BWP comprises switching an active downlink BWP to a predetermined default downlink BWP, and wherein the method further comprises switching an active uplink BWP to a predetermined default uplink BWP, responsive to detecting the reset event.

4. The method of any of claims 1-3, wherein the detected reset event comprises leaving RRC connected mode.

5. The method of any of claims 1-3, wherein the detected reset event comprises any event selected from the following:
cell reselection while the wireless device is waiting for a response to a Radio Resource Control, RRC, message sent to the wireless communication network;
expiry of a timer started upon the sending of an RRC connection establishment request;
receipt of an RRC connection reject message;
aborting of an RRC connection triggered by the wireless device;
initiation of an RRC connection re-establishment; and
failure of a handover.

6. A wireless device adapted to:
monitor (202) an active BWP of the one or more BWPs for a downlink control channel the wireless device further **characterized in that** it is adapted to:
detect (204) a reset event triggering a reset of a Medium Access Control, MAC, entity in the wireless device; and
responsive to detecting the reset event, switch (206) the active BWP to a predetermined default BWP of the one or more BWPs.

7. The wireless device according to claim 6, wherein the predetermined default BWP is a predetermined initial BWP of the one or more BWPS.

8. The wireless device according to claim 6-7, wherein to switch (206) the active BWP to the predetermined default BWP comprises switching an active downlink BWP to a predetermined default downlink BWP, and wherein the method further comprises switching an active uplink BWP to a predetermined default uplink BWP, responsive to detecting the reset event.

9. The wireless device according to claim 6-8, wherein the detected reset event comprises leaving RRC connected mode.

10. The wireless device of any of claims 6-8, wherein the detected reset event comprises any event selected from the following:
cell reselection while the wireless device is waiting for a response to a Radio Resource Control, RRC, message sent to the wireless communication network;
expiry of a timer started upon the sending of an RRC connection establishment request;
receipt of an RRC connection reject message;
aborting of an RRC connection triggered by the wireless device;
initiation of an RRC connection re-establishment; and
failure of a handover.

11. A computer program comprising instructions that, when executed on at least one processing circuit, cause the at least one processing circuit to carry out the method according to any one of claims 1-5.

12. A carrier containing the computer program of claim 11, wherein the carrier is one of an electronic signal, optical signal, radio signal, or computer readable storage medium.

## Patentansprüche

1. Verfahren zum Arbeiten mit Bandbreitenteilen, BWP, in einer drahtlosen Vorrichtung, die in einem drahtlosen Kommunikationsnetzwerk arbeitet und dazu eingerichtet ist, selektiv auf einem oder mehreren BWP zu arbeiten, die durch das drahtlose Kommunikationsnetzwerk eingerichtet wurden, wobei das Verfahren umfasst:
Überwachen (202) eines aktiven BWP des einen oder der mehreren BWP für einen Downlink-Steuerkanal, wobei das Verfahren ferner **gekennzeichnet ist durch:**
Feststellen (204) eines Rücksetzereignisses, das ein Zurücksetzen einer Medienzugriffssteuerungseinheit, MAC-Einheit, in der drahtlosen Vorrichtung auslöst; und
als Reaktion auf das Feststellen des Rücksetzereignisses, Umstellen (206) des aktiven BWP auf einen vorbestimmten Standard-BWP des einen oder der mehreren BWP.

2. Verfahren nach Anspruch 1, wobei der vorbestimmte Standard-BWP ein vorbestimmter initialer BWP des einen oder der mehreren BWP ist.

3. Verfahren nach Anspruch 1 oder 2, wobei das Umstellen (206) des aktiven BWP auf den vorbestimmten Standard-BWP das Umstellen eines aktiven Downlink-BWP auf einen vorbestimmten Standard-Downlink-BWP umfasst und wobei das Verfahren ferner als Reaktion auf das Feststellen des Rücksetzereignisses das Umstellen eines aktiven Uplink-BWP auf einen vorbestimmten Standard-Uplink-BWP umfasst.

4. Verfahren nach einem der Ansprüche 1 bis 3, wobei das festgestellte Rücksetzereignis das Verlassen des Modus RRC-Verbindung umfasst.

5. Verfahren nach einem der Ansprüche 1 bis 3, wobei das festgestellte Rücksetzereignis ein beliebiges aus Folgendem ausgewähltes Ereignis umfasst:
Zellenneuauswahl, während die drahtlose Vorrichtung auf eine Antwort auf eine an das drahtlose Kommunikationsnetzwerk gesendete Funkressourcensteuerungsnachricht, RRC-Nachricht, wartet;
Ablauf eines Zeitgebers, der beim Absenden einer RRC-Verbindungsaufbauanforderung gestartet wird;
Empfang einer RRC-Verbindungsablehnungsnachricht;
durch die drahtlose Vorrichtung ausgelöstes Abbrechen einer RRC-Verbindung;
Initiieren eines RRC-Verbindungswiederaufbaus; und
Fehlschlagen einer Übergabe.

6. Drahtlose Vorrichtung, die dazu angepasst ist:
einen aktiven BWP des einen oder der mehreren BWP für einen Downlink-Steuerkanal zu überwachen (202), wobei die drahtlose Vorrichtung ferner **dadurch gekennzeichnet ist, dass** sie dazu angepasst ist:
eine Rücksetzereignis, das ein Zurücksetzen einer Medienzugriffssteuerungseinheit, MAC-Einheit, in der drahtlosen Vorrichtung auslöst, festzustellen (204); und
als Reaktion auf das Feststellen des Rücksetzereignisses den aktiven BWP auf einen vorbestimmten Standard-BWP des einen oder der mehreren BWP umzustellen (206).

7. Drahtlose Vorrichtung Anspruch 6, wobei der vorbestimmte Standard-BWP ein vorbestimmter initialer BWP des einen oder der mehreren BWP ist.

8. Drahtlose Vorrichtung nach Anspruch 6 bis 7, wobei das Umstellen (206) des aktiven BWP auf den vorbestimmten Standard-BWP das Umstellen eines aktiven Downlink-BWP auf einen vorbestimmten Standard-Downlink-BWP umfasst und wobei das Verfahren ferner als Reaktion auf das Feststellen des Rücksetzereignisses das Umstellen eines aktiven Uplink-BWP auf einen vorbestimmten Standard-Uplink-BWP umfasst.

9. Drahtlose Vorrichtung nach Anspruch 6 bis 8, wobei das festgestellte Rücksetzereignis das Verlassen des Modus RRC-Verbindung umfasst.

10. Drahtlose Vorrichtung nach einem der Ansprüche 6 bis 8, wobei das festgestellte Rücksetzereignis ein beliebiges aus Folgendem ausgewähltes Ereignis umfasst:
Zellenneuauswahl, während die drahtlose Vorrichtung auf eine Antwort auf eine an das drahtlose Kommunikationsnetzwerk gesendete Funkressourcensteuerungsnachricht, RRC-Nachricht, wartet;
Ablauf eines Zeitgebers, der beim Absenden einer RRC-Verbindungsaufbauanforderung gestartet wird;
Empfang einer RRC-Verbindungsablehnungsnachricht;
durch die drahtlose Vorrichtung ausgelöstes Abbrechen einer RRC-Verbindung;
Initiieren eines RRC-Verbindungswiederaufbaus; und
Fehlschlagen einer Übergabe.

11. Computerprogramm, das Anweisungen umfasst, die bei ihrer Ausführung auf mindestens einer Verarbeitungsschaltung bewirken, dass die mindestens eine Verarbeitungsschaltung das Verfahren nach einem der Ansprüche 1 bis 5 ausführt.

12. Datenträger, der das Computerprogramm nach Anspruch 11 enthält, wobei der Träger eines von einem elektronischen Signal, einem optischen Signal, einem Funksignal oder einem computerlesbaren Speichermedium ist.

## Revendications

1. Procédé pour fonctionner avec des parties de bande passante, BWP, dans un dispositif sans fil fonctionnant dans un réseau de communication sans fil et configuré pour fonctionner sélectivement dans une ou plusieurs BWP configurées par le réseau de communication sans fil, le procédé comprenant :
la surveillance (202) d'une BWP active de la ou des BWP pour un canal de commande en liaison descendante, le procédé étant en outre **caractérisé par :**
la détection (204) d'un événement de réinitialisation déclenchant une réinitialisation d'une entité de contrôle d'accès au support, MAC, dans le dispositif sans fil ; et
en réponse à la détection de l'événement de réinitialisation, la commutation (206) de la BWP active à une BWP par défaut prédéterminée de la ou des BWP.

2. Procédé selon la revendication 1, dans lequel la BWP par défaut prédéterminée est une BWP initiale prédéterminée de la ou des BWP.

3. Procédé selon la revendication 1 ou 2, dans lequel la commutation (206) de la BWP active à la BWP par défaut prédéterminée comprend la commutation d'une BWP de liaison descendante active à une BWP de liaison descendante par défaut prédéterminée, et dans lequel le procédé comprend en outre la commutation d'une BWP de liaison montante active à une BWP de liaison montante par défaut prédéterminée, en réponse à la détection de l'événement de réinitialisation.

4. Procédé selon l'une quelconque des revendications 1 à 3, dans lequel l'événement de réinitialisation détecté comprend la sortie du mode connecté RRC.

5. Procédé selon l'une quelconque des revendications 1 à 3, dans lequel l'événement de réinitialisation détecté comprend tout événement choisi parmi les suivants :
la resélection de cellule pendant que le dispositif sans fil est en attente d'une réponse à un message de commande de ressources radio, RRC, envoyé au réseau de communication sans fil ;
l'expiration d'une minuterie démarrée lors de l'envoi d'une demande d'établissement de connexion RRC ;
la réception d'un message de rejet de connexion RRC ;
l'abandon d'une connexion RRC déclenchée par le dispositif sans fil ;
l'initiation d'un rétablissement de connexion RRC ; et
l'échec d'un transfert.

6. Dispositif sans fil conçu pour :
surveiller (202) une BWP active de la ou des BWP pour un canal de commande en liaison descendante, le dispositif sans fil étant en outre **caractérisé en ce qu'**il est adapté pour :
détecter (204) un événement de réinitialisation déclenchant une réinitialisation d'une entité de contrôle d'accès au support, MAC, dans le dispositif sans fil ; et
en réponse à la détection de l'événement de réinitialisation, commuter (206) la BWP active en une BWP par défaut prédéterminée de la ou des BWP.

7. Dispositif sans fil selon la revendication 6, dans lequel la BWP par défaut prédéterminée est une BWP initiale prédéterminée de la ou des BWP.

8. Dispositif sans fil selon les revendications 6 à 7, dans lequel commuter (206) la BWP active à la BWP par défaut prédéterminée comprend la commutation d'une BWP de liaison descendante active à une BWP de liaison descendante par défaut prédéterminée, et dans lequel le procédé comprend en outre la commutation d'une BWP de liaison montante active à une BWP de liaison montante par défaut prédéterminée, en réponse à la détection de l'événement de réinitialisation.

9. Dispositif sans fil selon la revendication 6 à 8, dans lequel l'événement de réinitialisation détecté comprend la sortie du mode connecté RRC.

10. Dispositif sans fil selon l'une quelconque des revendications 6 à 8, dans lequel l'événement de réinitialisation détecté comprend tout événement choisi parmi les suivants :
la resélection de cellule pendant que le dispositif sans fil est en attente d'une réponse à un message de commande de ressources radio, RRC, envoyé au réseau de communication sans fil ;
l'expiration d'une minuterie démarrée lors de l'envoi d'une demande d'établissement de connexion RRC ;
la réception d'un message de rejet de connexion RRC ;
l'abandon d'une connexion RRC déclenchée par le dispositif sans fil ;
l'initiation d'un rétablissement de connexion RRC ; et
l'échec d'un transfert.

11. Programme informatique, comprenant des instructions qui, lorsqu'elles sont exécutées sur au moins un circuit de traitement, amènent l'au moins un circuit de traitement à effectuer le procédé selon l'une quelconque des revendications 1 à 5.

12. Porteuse contenant le programme d'ordinateur selon la revendication 11, dans laquelle la porteuse est l'un parmi un signal électronique, un signal optique, un signal radio ou un support de stockage lisible par ordinateur.
